(19) Europäisches Patentamt
European Patent Office
Office européen des brevets

(11) Numéro de publication: 0 149 393
B1

# (12) FASCICULE DE BREVET EUROPÉEN

(45) Date de publication du fascicule du brevet: 08.03.89

(51) Int. Cl.⁴: **H 01 M 6/18**, H 01 B 1/12, C 08 G 79/00, C 08 G 79/10

(21) Numéro de dépôt: 84402684.9

(22) Date de dépôt: 20.12.84

## (54) Nouveau matériau macromoléculaire à conduction ionique et son procédé de fabrication.

(30) Priorité: 02.01.84 FR 8400006

(43) Date de publication de la demande: 24.07.85 Bulletin 85/30

(45) Mention de la délivrance du brevet: 08.03.89 Bulletin 89/10

(84) Etats contractants désignés: AT BE CH DE GB IT LI LU NL SE

(56) Documents cité:
EP-A-0 018 780
EP-A-0 037 776
FR-A-2 013 028
US-A-4 132 724
US-A-4 277 584

(73) Titulaire: SOCIETE NATIONALE ELF AQUITAINE, Tour Aquitaine, F-92400 Courbevoie (FR)

(72) Inventeur: Armand, Michel, Domaine Jean Jaurès Allée Maurice Ravel, F-38130 Echirolles (FR)
Inventeur: Muller, Daniel, 12 Rue Frédéric Mistral, F-64000 Pau (FR)

(74) Mandataire: Boillot, Marc, SOCIETE NATIONALE ELF AQUITAINE Division Propriété Industrielle Tour Elf, F-92078 Paris la Défense Cédex 45 (FR)

EP 0 149 393 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

L'invention concerne un nouveau matériau macromoléculaire à conduction ionique utilisable notamment comme électrolyte solide pour la réalisation de générateurs électrochimiques de courant.

Elle concerne en particulier des matériaux macromoléculaires à conduction ionique qui ne sont pas cristallins à température ambiante ou qui le sont suffisamment peu pour que l'on puisse les utiliser pour réaliser des générateurs électrochimiques de courant, qu'ils soient secondaires ou primaires.

Selon l'art antérieur, on connait des électrolytes solides constitués par des solutions solides de composés ioniques dans des polymères. On peut par exemple se reporter à la demande de brevet Européen 0 013 199 intitulée "générateurs électrochimiques de production de courant et nouveaux matériaux pour leur fabrication" qui décrit en particulier des solutions solides de sels de lithium dans des polymères aprotiques polaires susceptibles de solvater le cation. Ces solutions constituent des électrolytes solides utilisables dans des générateurs solides en couches minces. Parmi les polymères cités dans cette demande de brevet, figurent notamment les polyoxydes d'éthylène, les polyoxydes de propylène, le polydiméthoxyéthylène et leurs copolymères.

De façon à améliorer les propriétés mécaniques des électrolytes ainsi constitués et leur comportement vis à vis de la cristallisation on a proposé dans la demande de brevet français 2 485 274 "Electrolyte solide à base de matériau macromoléculaire à conduction ionique", d'utiliser comme électrolyte un matériau complexe élastomère réticulé. La réticulation se fait à partir de polymères contenant des fonctions réticulables selon les techniques usuelles, en particulier des fonctions conduisant à des réseaux uréthannes susceptibles de réagir avec le métal de l'anode et donc de générer une dégradation du polymère qui ne pourra plus alors jouer son rôle de liant élastomère, concomitante à une consommation d'une partie dudit métal par oxydation irréversible.

Selon la demande de brevet français 2 493 609 "Electrolyte solide macromoléculaire pour générateur électrochimique au lithium", l'électrolyte solide renfermant le sel solvaté est un copolymère du type polyester élastomérique résultant de la polycondensation de diméthyltéréphtalate, d'un polyglycol et d'un diol. En tant que glycol, ladite demande cite le polytétraméthylène éther glycol, le polyéthylène éther glycol et le polypropylèneéther-glycol. Cette solution présente un inconvénient similaire à celle de la demande de brevet 2 485 274 puisque les condensats ainsi formés comportent des fonctions esters qui sont susceptibles elles aussi, de réagir avec le métal de l'anode et de dégrader le polymère.

En outre, selon ces deux procédés, il est nécessaire d'employer des quantités stoechiométriques d'agent de condensation ou de réticulation pour le bon déroulement des réactions mises en jeu. Cette condition rend difficile l'élimination des fonctions OH résiduelles des polyols de départ - Le matériau macromoléculaire ainsi constitué comporte donc des fonctions protiques susceptibles d'accélérer la réduction des esters et des uréthannes au niveau du matériau d'électrode négative.

De façon à éliminer ces fonctions protiques, on peut introduire un excès d'agent de condensation et ainsi éliminer les fonctions OH. Dans le cas des polycondensats obtenus selon la description de la demande de brevet n° 2 493 609, cette élimination conduit à une diminution importante des poids moléculaires et donc des propriétés mécaniques. Oans le cas de la réticulation décrite dans la demande de brevet n° 2 485 274, on risque d'introduire par ce biais un excès d'un réactif instable en oxydo-réduction.

De plus, on remarque que dans le cas de la réticulation du brevet 2 485 274 on obtient des réseaux réticulés sans possibilité d'obtenir un polymère thermoplastique alors que dans le cas des polycondensats de la demande 2 493 609, on obtient des chaînes linéaires qui ne sont pas réticulées.

Au contraire, la présente invention a pour objet d'obtenir indifféremment des polycondensats linéaires ou branchés ou des réticulats qui sont stables dans le domaine redox mis en jeu dans les accumulateurs au lithium. Pour cela, elle fait appel à des agents de condensation eux-mêmes stables vis-à-vis du lithium et qui peuvent être introduits en excès de façon à faire disparaître complètement les fonctions alcools des glycols de départ. A cet effet, elle prévoit un matériau à conduction ionique constitué par un matériau macromoléculaire dans lequel un sel est dissout, caractérisé en ce que le matériau macromoléculaire est un polymère comprenant au moins un atome métallique et au moins deux chaînes polymériques dérivées chacune d'un ou plusieurs monomères comportant chacun un hétéroatome apte à former des liaisons de type donneur accepteur avec le cation du sel en solution. Chaque atome métallique est relié à au moins une des deux chaînes par l'intermédiaire d'un atome d'oxygène pour chacune des chaînes.

De préférence, le matériau à conduction ionique est caractérisé en ce que le métal est choisi parmi l'aluminium, le zinc ou le magnésium.

Mais l'invention concerne aussi un procédé de fabrication d'un matériau à conduction ionique constitué par un matériau macromoléculaire dans lequel un sel est dissout, caractérisé en ce qu'il consiste à réaliser une condensation d'un polyol en présence d'un agent de pontage, ledit polyol étant dérivé d'un ou plusieurs monomères comportant au moins un hétéroatome apte à former des liaisons de type donneur accepteur avec le cation en solution, ledit agent de pontage comportant au moins deux liaisons carbone métal, le métal étant choisi parmi l'aluminium, le zinc et le magnésium.

De préférence, la condensation est effectuée en présence d'un agent de pontage comportant seulement deux liaisons carbone métal, mais elle peut être aussi effectuée en présence d'un agent de pontage comprenant trois liaisons carbone aluminium.

Selon un mode préféré de réalisation, le polyol présente une structure branchée et l'agent de pontage comprend deux liaisons carbone métal.

De préférence encore, le polyol a une masse moléculaire comprise entre 300 et 20 000.

Selon un autre mode de réalisation, le polyol de départ est un polyoxyéthylène glycol de masse moléculaire égale à 1 500 ou encore égale à 3 000.

Enfin, selon un autre mode de réalisation, le polyol est un poly (oxyde d'éthylène - oxyde de propylène - oxyde d'éthylène)glycol de masse moléculaire égale à 5 000.

Selon un autre mode de réalisation, le polyol de départ est un poly(oxyde d'éthylène - oxyde de propylène - oxyde d'éthylène)glycol de masse moléculaire égale à 8 500.

De manière préférentielle, l'agent de pontage est choisi parmi les alkyl-métalliques et leurs dérivés représentés par l'une des formules:

A1 ($R_1$, $R_2$, $R_3$), Zn($R_1$, $R_2$), Mg($R_1$, $R_2$) dans laquelle $R_1$, $R_2$ et $R_3$ peuvent être semblables ou différents et représentant des radicaux alkyles comportant de 1 à 12 atomes de carbone, $R_3$ pouvant en outre représenter un halogène ou un radical alcoxy.

Sans sortir du cadre de l'invention, on pourrait utiliser des agents de pontage comportant plus de trois liaisons carbone-aluminium. C'est ainsi que l'on peut avantageusement utiliser des aluminooxanes, c'est-à-dire des produits présentant 4 liaisons carbone-aluminium.

L'intérêt particulier de ces nouveaux matériaux macromoléculaires à conduction ionique, selon l'invention, réside dans leur utilisation à la réalisation d'électrolytes pour des générateurs électrochimiques.

Cette utilisation est dépourvue de la plupart des défauts des réalisations selon l'art antérieur puisque, du fait de leur structure obtenue par la réaction de polycondensation en présence d'un agent de pontage, les matériaux macromoléculaires à conduction ionique selon l'invention présentent des irrégularités qui correspondent en particulier aux groupes alcoolates métalliques et qui leur confèrent des taux de cristallinité très bas les rendant ainsi pratiquement amorphes à température ambiante. Ils ne cristallisent pas dans un large domaine de température pour lequel ils restent amorphes. On obtient donc un matériau dans lequel le sel de l'électrolyte est uniformément réparti, avec tous les avantages que cela représente pour la conductivité.

D'une manière préférentielle, le polyol dérivé d'un motif monomère représenté par la formule:

(I) 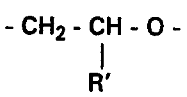

dans laquelle R' représente un atome d'hydrogène ou l'un des groupes Ra, - $CH_2$ -O-Ra, -$CH_2$ -O-Re-Ra, -$CH_2$-N = $(CH_3)_{2'}$, avec Ra représentant un radical alkyle ou cycloalkyle comportant notamment 1 à 16, de préférence 1 à 4 atomes de carbone, Re représentant un radical polyéther de formule générale

$-(CH_2-CH_2-O)_p-$, p ayant une valeur de 1 à 100, notamment de 1 à 2.

Mais selon un autre mode de réalisation de l'invention, le polyol peut dériver de l'enchainement statistique ou séquence des monomères de formule I avec des motifs représentés soit par la formule suivante:

(II) 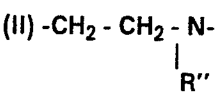

dans laquelle R'' représente Ra, -Re-Ra, avec Ra et Re ayant respectivement l'une des significations susindiquées, soit par la formule:

(III) 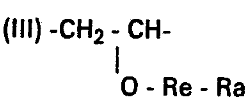

dans laquelle Ra et Re sont respectivement l'une des significations susindiquées soit par la formule:

(IV) 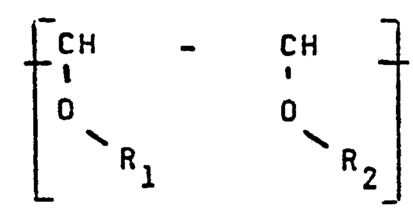

dans laquelle $R_1$ et $R_2$ sont identiques ou différents et représentent chacun l'un des groupes Re, Re-Ra avec les significations ci-dessus, Re pouvant alors représenter aussi un poly-éther de formule:

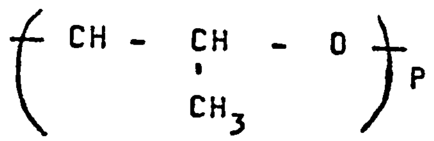

De préférence encore les polyols utilisés sont des glycols et ils ont en particulier, une masse moléculaire comprise entre 300 et 20.000.

Selon différents modes de réalisation, ces polyols peuvent avoir une structure branchée et/ou comprendre des enchaînements récurrents identiques ou différents, les enchaînements différents pouvant être combinés d'une manière statistique ou séquencée.

On peut par exemple partir d'un $\alpha\,\Omega$ diol linéaire ou d'un diol branché, d'un triol.

Ainsi qu'il apparaitra ci-après, le choix des polyols utilisés sera fonction de leurs caractéristiques dont dépendront la valeur de la conductivité ionique, la résistance mécanique et l'évolution de la conductivité en fonction de la température.

On comprend donc que l'invention permet d'obtenir des structures non réticulées en partant de glycol et en utilisant un dialkyl-métallique comme agent de pontage. Elle permet d'obtenir des structures réticulées en utilisant soit un glycol et un trialkylaluminium, soit un polyol et un dialkyl-métallique ou un trialkylaluminium.

Le fait d'utiliser des agents de pontage du type de ceux comportant au moins deux liaisons métal-carbone permet d'éviter les inconvénients de l'art antérieur puisque de tels agents qui sont stables dans le domaine rédox mis en jeu dans les accumulateurs au lithium peuvent être introduits en excès de façon à ce que le polymère ne comporte plus de fonction -OH. Il peut avoir quelques fonctions résiduelles de type carbone métal. Du fait de la grande activité de l'agent de pontage utilisé selon l'invention, on peut éliminer toutes les fonctions alcools résiduelles en n'utilisant qu'un très faible excès dudit agent de pontage de sorte que l'on peut obtenir un matériau macromoléculaire de haut poids moléculaire même dans le cas de polycondensats non réticulés. De plus, en fin de polycondensation, on peut s'assurer de l'élimination des fonctions OH résiduelles en ajoutant un excès de l'agent de polycondensation dans des proportions allant de 15 à 20 % de la stoéchiométrie.

Les sels mis en solution dans le matériau macromoléculaire sont avantageusement des sels de lithium. Ils peuvent être similaires à ceux décrits dans la demande de brevet européen n° 0 013 199 mais on pourra aussi choisir des bis-perhalogénoalkyl ou sulfonyl-imidures tels que décrits dans la demande de brevet français n° 2 527 602 déposée le 1er Juin 82, des tétraalkynylborates ou aluminates tels que décrits dans la demande de brevet français n° 2 527 611 ou encore des tétrakistrialkylsiloxy alanates de métaux alcalins tels que décrits dans la demande de brevet français n° 2 527 610.

On pourra aussi choisir d'utiliser les closoboranes comme ceux qui font l'objet de la demande de brevet français n° 2 523 770 du 18 Mars 1982.

Pour fabriquer les matériaux macromoléculaires, on mélange le polyol et le sel, éventuellement en présence d'un solvant dans le cas où le polyol lui-même n'est pas liquide à la température de réaction et on ajoute l'alkylaluminium. On obtient alors le polycondensat, réticulé ou non réticulé selon le nombre de fonctions condensables du polyol et/ou de l'agent de pontage.

On peut aussi effectuer la mise en solution du sel après la polycondensation, soit par voie ex solvant, soit par des techniques de fusion quand le matériau macromoléculaire est thermoplastique.

Les polycondensats réticulés peuvent être obtenus en passant par une étape de pré-condensation en faisant réagir une partie du diol sur un excès stoéchiométrique de l'alkyl-métallique de façon à obtenir un polymère de faible masse qui est alkyl-métal à ses deux extrémités, selon le processus suivant en référence à l'alkylaluminium:

OH ∿∿ + $Al(R)_3$ ---> $(R)_2$ AlO ∿∿ $OAl(R)_2$ + RH

ce polymère joue le rôle de précondensat. On rajoute ensuite, dans une deuxième étape, la quantité restante du polyol pour obtenir le polycondensat final.

L'intérêt de cette polycondensation en deux étapes dont la première est une étape de précondensation réside dans le fait que cette première étape permet l'élimination facile des calories puisqu'elle met en jeu des matériaux de faible masse moléculaire donc moins visqueux. Un autre avantage est lié au fait que pendant cette étape de précondensation, on élimine du milieu réactionnel les radicaux RH les plus volatils et les plus légers de sorte que la réaction finale se fait dans des conditions homogènes compatibles avec le milieu visqueux.

Lors de l'utilisation du matériau macromoléculaire à conduction ionique selon l'invention pour la réalisation d'un accumulateur, on peut prévoir non seulement la réalisation d'un électrolyte mais aussi celle d'électrodes composites, c'est-à-dire d'électrodes pour lesquelles le matériau actif est mélangé à de l'électrolyte avec éventuellement un matériau à conduction électronique,

Pour fabriquer l'électrode positive d'un accumulateur on pourra incorporer le matériau actif, par exemple

$TiS_2$ ou $V_6$ $O_{13}$, au mélange initial. Ce mélange sera donc constitué par le polyol, le sel, le matériau actif et le solvant. On lui ajoute ensuite l'agent de condensation. Dans le cas où le matériau macromoléculaire est un polycondensat non réticulé, on pourra utiliser des techniques sans solvant par exemple fusion après broyage et éventuellement compactage.

Pour réaliser une électrode négative à base de lithium, on prendra les précautions nécessaires pour que le lithium ne puisse pas réagir avec la liaison OH du polyol.

Pour cela, on pourra utiliser un matériau macromoléculaire non réticulé et incorporer le lithium par voie solvant après que la réaction de polycondensation soit terminée.

L'invention sera mieux comprise à la lecture des exemples suivants qui sont donnés à titre d'illustration mais n'ont aucun caractère limitatif.

Dans ces exemples, la définition du rapport O/Li est la même que celle donnée dans la demande Européenne 0 013 199.

Premier exemple: Réalisation d'un électrolyte solide à partir de polyoxyéthylèneglycol.

On a mis en solution, dans un mélange d'acétonitrile et de chlorure de méthylène, du polyoxyethylèneglycol de masse moléculaire égale à 1500 et du perchlorate de lithium, selon les proportions suivantes: (pourcentages massiques).

| | |
|---|---|
| P O E G 1500 | 51,- % |
| $LiC1O_4$ | 11,8 % |
| $CH_3$ CHN | 27,7 % |
| $CH_2$ $Cl_2$ | 8,6 % |

26 g de cette solution, dont l'extrait sec est d'environ 60 %, dans laquelle le rapport O/Li est égal à 12,5 sont mélangés sous agitation à 5°C à 6 ml de tri-octyl aluminium (T. O. A.) ce qui représente un excès d'environ 15 % par rapport à la stoechiométrie. Le produit obtenu est étalé à l'aide d'un gabarit de 400 µm sur une surface plane de polyéthylène. On obtient ainsi un film humide qui après rechauffage à 25°C réticule en moins de deux heures. Après séchage, le film est décollé de son support puis introduit dans une cellule de mesure de conductivité afin de mesurer les températures pour lesquelles la conductivité est égale à $10^{-5}$ $\Omega^{-1}$ $cm^{-1}$ (tσ $10^{-5}$) et à $10^{-4}$ $\Omega^{-1}$ $cm^{-1}$ (tσ $10^{-4}$).

tσ $10^{-4}$ = 52°C

tσ $10^{-5}$ = 22°C

Exemple compartif

On a réalisé un électrolyte similaire à partir du même polyol (POEG 1500)mais en utilisant une réticulation au triisocyanate aliphatique commercialisé par BAYER sous le nom de DESMODUR.N. Pour un même rapport O/Li, on a obtenu les résultats suivants:

tσ $10^{-5}$ = 54°C

tσ $10^{-4}$ = 90°C

on remarque alors que l'invention permet l'obtention de films minces amorphes mais qui présentent des conductivités ioniques à basse température nettement améliorées par rapport à l'art antérieur.

Deuxième exemple. On a réalisé les mêmes opérations que dans l'exemple 1 mais en remplaçant le perchlorate de lithium par du trifluoromethane-sulfonate de lithium, dans un rapport O/Li égal à 12, en utilisant sensiblement les mêmes paramètres que dans l'exemple 1. On a reporté les résultats des mesures de conductivité dans le tableau I ci-après dans lequel la première colonne concerne un matériau obtenu selon l'invention à partir de polyoxyéthylène glycol condensé en présence de trioctyl aluminium et la seconde colonne concerne un matériau obtenu par réticulation au tri-isocyanate aromatique commercialisé par BAYER sous le nom de DESMODUR. R.

TABLEAU III

| | TOA 5000 | TOA 8500 | DESMODUR N. 8500 | DESMODUR R. 5000 | DESMODUR R. 8500 |
|---|---|---|---|---|---|
| tσ $10^{-4}$ $\Omega^{-1}cm^{-1}$ | 70 | 74 | 120 | 109 | 105 |
| tσ $10^{-5}$ $\Omega^{-1}cm^{-1}$ | 35 | 40 | 65 | 63 | 59 |

Sixième exemple

Réalisation d'un accumulateur électrochimique.

On a réalisé la pile suivante:

1 - Electrolyte - polycondensat obtenu par condensation directe, avec un tri-octylaluminium, de polyoxyéthylèneglycol, de masse moléculaire 3000, dans lequel est dissous du perchlorate de lithium avec un rapport de O/Li égal à 12.

Troisième exemple

Cet exemple concerne un matériau similaire à celui de l'exemple 1 mais le glycol utilisé était un polyoxyéthylène glycol de masse moléculaire égale à 3000.

On a réalisé tout d'abord le mélange suivant:

| | | |
|---|---|---|
| P.O.E.G. (3000) | 48 % | massique |
| $LiClO_4$ | 9,6 | " |
| $CH_3CN$ | 38,5 | " |
| $CH_2Cl_2$ | 3,85 | " |

A un extrait de cette solution, dans laquelle le rapport O/Li est de 12,5, on a ajouté du trio-ctyl aluminium avec un excès de 15 % par rapport à la stoechiométrie. L'extrait sec était d'environ 75 %. La réticulation s'effectue en moins de 2 heures et les mesures de conductivité ont donné les résultats suivants:.

$t\sigma 10^{-4}$ = 46°C
$t\sigma\ 10^{-5}$
= 26°C

Quatrième exemple

Cet exemple est relatif au même matériau que celui de l'exemple 3 mais il est fabriqué avec une étape de précondensation au cours de laquelle seulement 1/3 de la solution de départ est mélangé au T.O.A. Les mesures de conductivité sont les suivantes:

$t\sigma 10^{-4}$ = 55,-°C
$t\sigma 10^{-5}$ = 29,3°C

on remarque donc que cette étape de prépolymérisation donne de très bons résultats quant à la conductivité tout en autorisant une mise en oeuvre plus facile, en particulier vis à vis de l'homogénéisation. Pour ce même matériau, mais en utilisant un tri-hexylaluminium au lieu du TOA on obtient sensiblement les mêmes résultats après l'étape de précondensation:

$t\sigma\text{-}10^{-4}$ = 49,5 °C
$t\sigma\text{-}10^{-5}$ = 25,-°C

Toujours pour ce même matériau mais en utilisant une réticulation au tri-isocyanate, on obtient,

TABLEAU II

| | DESMODUR N. | DESMODUR R. |
|---|---|---|
| $t\sigma 10^{-4}\Omega^{-1}cm^{-1}$ | 87 | 120 |
| $t\sigma 10^{-5}\Omega^{-1}cm^{-1}$ | 48 | >67 |

Cinquième exemple

Cet exemple est relatif à un matériau macromoléculaire réalisé à partir d'un diol triséquencé oxyde d'éthylène-oxyde de propylène-oxyde d'éthylène, noté ci-dessous P(OE-OP-OE)G. La méthode de fabrication utilisée était similaire à celle de l'exemple 1, c'est-à-dire sans phase de précondensation. On a réalisé deux essais, le premier avec un diol de masse moléculaire 5000, le second avec un diol de masse moléculaire 8500 que l'on a condensé avec du T.O.A. en excès.

On a comparé les résultats obtenus - au point de vue de la conductivité - à ceux obtenus pour des matériaux identiques obtenus par réticulation aux isocyanates du type DESMODUR N. d'une part et DESMODUR R. d'autre part. Les résultats sont notés dans le tableau III où l'on porte sur la première ligne la masse moléculaire et la voie de synthèse utilisée, TOA ou DESMODUR selon que l'on a condensé le glycol avec du TOA ou que l'on a fait une réticulation aux isocyanates

d'oxygène pour chacune des chaînes.

2. Matériau à conduction ionique selon la revendication 1, caractérisé en ce que le métal est choisi parmi l'aluminium, le zinc ou le magnésium.

3. Procédé de fabrication d'un matériau à conduction ionique constitué par un matériau macromoléculaire dans lequel un sel est dissous, caractérisé en ce qu'il consiste à réaliser une condensation d'un polyol en présence d'un agent de pontage, ledit polyol étant dérivé d'un ou plusieurs monomères comportant au moins un hétéroatome apte à former des liaisons de type donneur accepteur avec le cation en solution, ledit agent de pontage comportant au moins deux liaisons carbone métal, le métal étant choisi parmi l'aluminium, le zinc et le magnésium, et à porter ledit sel en solution dans le produit de la réaction.

4. Procédé selon la revendication 3, caractérisé en ce que la condensation est effectuée en présence d'un agent de pontage comprenant seulement deux liaisons carbone métal.

5. Procédé selon la revendication 3, caractérisé en ce que la condensation est effectuée en présence d'un agent de pontage comprenant trois liaisons carbone aluminium.

6. Procédé selon la revendication 3, caractérisé en ce que le polyol présente une structure branchée et en ce que l'agent de pontage comprend deux liaisons carbone-métal.

2 - Electrode positive - c'est une électrode composite comprenant un matériau macromoléculaire à conduction électronique.
+ matériau à conduction ionique: copolymère oxyde d'éthylène (90 % molaire) méthylglycidyl éther (8 % molaire), dans lequel est dissous du perchlorate de lithium (O/Li = 12).
+ matériau actif: bioxyde de molybdène
+ conducteur électronique: noir de carbone.
La composition de l'électrode est la suivante, en pourcentage volumique:
+ matériau à conduction ionique: 50 %
+ matériau actif: 40 %
+ conducteur électronique: 10 %

3 - Electrode négative, on a utilisé un feuillard de lithium. La pile réalisée avait une épaisseur de 150 microns et une surface de $4 cm^2$. Elle a été sertie dans un boîtier d'acier inoxydable.
On a effectué une première décharge à C/30 à 30°C, c'est-à-dire sous une intensité telle que toute la capacité est déchargée en 30 heures. Cette intensité était de 50 $\mu$ A. Pour cette décharge l'utilisation a été de 32 % c'est-à-dire que l'on a récupéré 32 % de la capacité totale de la pile. Lorsque l'on augmente la température, l'utilisation croît. On a obtenu 40 % d'utilisation à 40°C.
Dans les mêmes conditions, avec un électrolyte selon l'art antérieur du type uréthane constitué par du perchlorate de lithium en solution dans du polyoxyéthylène, on ne dépasse pas 6 % d'utilisation pour les premières charges/ décharges.

<u>Septième exemple</u>.

Réalisation d'un accumulateur dont l'électrolyte est un polycondensat obtenu par condensation au TOA d'un polyoxyéthylène glycol de masse molaire 3000.

La pile réalisée est identique à celle du sixième exemple. Elle a été cyclée à 30°C, à une capacité de C/100. On obtient une stabilisation du taux d'utilisation vers 15 % au bout du sixième cycle.

De plus, cet accumulateur a été comparé à une accumulateur selon l'art antérieur - uréthane, même matériau macromoléculaire, électrodes identiques pour les deux accumulateurs. Les taux d'utilisation obtenus pour la charge (C) et la décharge (D) des deux premiers cycles sont indiqués dans le tableau IV ci-dessous.

TABLEAU IV

| N° CYCLE | POEG 3000 TOA | | POEG 3000 DESMODUR N. | |
|---|---|---|---|---|
| | D | C | D | C |
| 1 | 36 % | 30 % | 6 % | 15 % |
| 2 | 26 % | 28 % | 8 % | 16 % |

On remarque donc que les piles selon l'invention présentent des taux d'utilisation élevés pour les premières charges/ décharges ce qui s'explique bien par le fait que le matériau macromoléculaire selon l'invention ne contient plus de fonctions protiques ou de réactifs instables. En outre, comme il ressort de tous ces exemples on a obtenu un matériau qui est très performant à la température ambiante.

Mais l'invention n'est pas limitée aux exemples décrits. Elle en englobe au contraire toutes les variantes.

**Revendications**

1. Matériau à conduction ionique constitué par un matériau macromoléculaire dans lequel un sel est dissous, caractérisé en ce que le matériau macromoléculaire est un polymère comprenant au moins un atome métallique et au moins deux chaînes polymériques dérivées chacune d'un ou plusieurs monomères comportant chacun au moins un hétéroatome apte à former des liaisons de type donneur accepteur avec le cation du sel en solution, ledit atome métallique étant relié à au moins une des deux chaînes par l'intermédiaire d'un atome

TABLEAU I

| | POEG (1500) TOA | POEG (1500) DESMODUR.R |
|---|---|---|
| $t\sigma 10^{-4}\Omega^{-1}cm^{-1}$ | 60 | 132 |
| $t\sigma 10^{-5}\Omega^{-1}cm^{-1}$ | 24 | >170 |

A la lecture de ce tableau on remarque que l'on obtient sensiblement les mêmes résultats pour les matériaux selon l'invention dans lesquels le sel est un perchlorate ou un trifluorométhanesulfonate.

On remarque aussi une amélioration nette des résultats par rapport à la réticulation au tri-isocyanate.

7. Procédé selon la revendication 3, caractérisé en ce que le polyol a une masse moléculaire comprise entre 300 et 20 000.

8. Procédé selon la revendication 3, caractérisé en ce que le polyol est un polyoxyéthylène glycol de masse moléculaire égale à 1 500.

9. Procédé selon la revendication 3, caractérisé en ce que le polyol est un polyoxyéthylène glycol de masse moléculaire égale à 3 000.

10. Procédé selon la revendication 3, caractérisé en ce que le polyol est un poly (oxyde d'éthylène - oxyde de propylène - oxyde d'éthylène) glycol de masse moléculaire égale à 5 000.

11. Procédé selon la revendication 3, caractérisé en ce que le polyol est un poly (oxyde d'éthylène - oxyde de propylène - oxyde d'éthylène) glycol de masse moléculaire égale à 8 500.

**Patentansprüche**

1. Ionenleitendes Material, bestehend aus einem makromolekularen Material, in dem ein Salz gelöst ist, dadurch gekennzeichnet, daß das makromolekulare Material ein Polymer ist, das wenigstens ein Metallatom und wenigstens zwei Polymerketten enthält, die jeweils von einem oder mehreren Monomeren abgeleitet sind, die jeweils wenigstens ein Heteroatom umfassen, das Bindungen vom Donator-Acceptor-Typ mit dem Kation des in Lösung vorliegenden Salzes zu bilden vermag, wobei das Metallatom mit wenigstens einer der beiden Ketten durch ein Sauerstoffatom für jede der Ketten verknüpft ist.

2. Ionenleitendes Material nach Anspruch 1, dadurch gekennzeichnet, daß das Metall ausgewählt ist aus der Gruppe Aluminium, Zink oder Magnesium.

3. Verfahren zur Herstellung eines ionenleitenden Materials, bestehend aus einem makromolekularen Material, in dem ein Salz gelöst ist, dadurch gekennzeichnet, daß man ein Polyol in Anwesenheit eines Brückenbildungsmittels kondensiert, wobei das Polyol von einem oder mehreren Monomeren abgeleitet ist, die wenigstens ein Heteroatom enthalten, das Bindungen vom Donator-Acceptor-Typ mit dem in Lösung vorliegenden Kation zu bilden vermag, das Brückenbildungsmittel wenigstens zwei Kohlenstoff-Metall-Bindungen enthält, wobei das Metall ausgewählt ist aus der Gruppe Aluminium, Zink und Magnesium, und das Salz im Reaktionsprodukt in Lösung bringt.

4. Verfahren nach Anspruch 3, dadurch gekennzeichnet, daß die Kondensation in Anwesenheit eines Brückenbildungsmittels durchgeführt wird, das lediglich zwei Kohlenstoff-Metall-Bindungen enthält.

5. Verfahren nach Anspruch 3, dadurch gekennzeichnet, daß die Kondensation in Anwesenheit eines Brückenbildungsmittels durchgeführt wird, das lediglich drei Kohlenstoff-Aluminium-Bindungen enthält.

6. Verfahren nach Anspruch 3, dadurch gekennzeichnet, daß das Polyol eine verzweigte Struktur darstellt und das Brückenbildungsmittel zwei Kohlenstoff-Metall-Bindungen enthält.

7. Verfahren nach Anspruch 3, dadurch gekennzeichnet, daß das Polyol eine Molekularmasse zwischen 300 und 20.000 enthält.

8. Verfahren nach Anspruch 3, dadurch gekennzeichnet, daß das Polyol ein Polyoxyethylenglycol mit einer Molekularmasse von 1.500 ist.

9. Verfahren nach Anspruch 3, dadurch gekennzeichnet, daß das Polyol ein Polyoxyethylenglycol mit einer Molekularmasse von 3.000 ist.

10. Verfahren nach Anspruch 3, dadurch gekennzeichnet, daß das Polyol ein Poly(ethylenoxid - propylenoxid - ethylenoxid)glycol mit einer Molekularmasse von 5.000 ist.

11. Verfahren nach Anspruch 3, dadurch gekennzeichnet, daß das Polyol ein Poly(ethylenoxid - propylenoxid - ethylenoxid)glycol mit einer Molekularmasse von 8.500 ist.

**Claims**

1. Ion conducting material comprising a macromolecular material having a salt in solution therein characterised in that the macromolecular material is a polymer comprising at least one metal atom and at least two polymer chains each derived from one or more monomers each containing at least one heteroatom capable of forming bonds of the donor-acceptor type with the cation of the salt in solution, the said metal atom being connected by an oxygen atom to at least one of the two chains.

2. Ion conducting material according to claim 1, characterised in that the metal is selected from aluminium, zinc and magnesium.

3. Process for the manufacture of a ion conducting material comprising a macromolecular material having a salt in solution therein, said process being characterised in that it comprises submitting a polyol to a polycondensation in the presence of a bridging agent, wherein said polyol is derived from one or more monomers comprising at least one heteroatom capable of forming bonds of the donor-acceptor type with the cation of the salt in solution, the said bridging agent comprising at least two carbon-metal bonds, with the metal being selected from aluminium, zinc and magnesium, and bringing the said salt in solution in the product of the reaction.

4. Process according to claim 3, characterised in that the polycondensation is carried out in the presence of a bridging agent having only two carbon-metal bonds.

5. Process according to claim 3, characterised in that the polycondensation is carried out in the presence of a bridging agent having three carbon-aluminium bonds.

6. Process according to claim 3, characterised in that the polyol has a branched structure and in that the bridging agent has two carbon-metal bonds.

7. Process according to claim 3, characterised in that the polyol has a molecular weight between 300 and 20000.

8. Process according to claim 3, characterised in that the polyol consists of a polyoxethylene glycol of a molecular weight egual to 1500.

9. Process according to claim 3, characterised in that the polyol consists of a polyoxyethylene glycol with a molecular weight equal to 3000.

10. Process according to claim 3, characterised in that the polyol is a poly(oxyethylene - oxypropylene - oxyethylene)glycol with a molecular weight equal to 5000.

11. Process according to claim 3, characterised in that the polyol is a poly(oxyethylene - oxypropylene - oxyethylene)glycol with a molecular weight equal to 8500.